**Europäisches Patentamt**

**European Patent Office**

**Office européen des brevets**

(19)

(11) Veröffentlichungsnummer : **0 397 639 B1**

(12) # EUROPÄISCHE PATENTSCHRIFT

(45) Veröffentlichungstag der Patentschrift : **28.10.92 Patentblatt 92/44**

(51) Int. Cl.⁵ : **B60C 11/01**

(21) Anmeldenummer : **90890111.9**

(22) Anmeldetag : **11.04.90**

(54) **Radialreifen für Lastkraftwagen.**

(30) Priorität : **10.05.89 AT 1111/89**

(43) Veröffentlichungstag der Anmeldung : **14.11.90 Patentblatt 90/46**

(45) Bekanntmachung des Hinweises auf die Patenterteilung : **28.10.92 Patentblatt 92/44**

(84) Benannte Vertragsstaaten : **AT DE FR GB IT SE**

(56) Entgegenhaltungen :
**DE-A- 2 102 548**
**DE-A- 2 849 577**
**DE-A- 2 951 444**
**GB-A- 2 142 885**

(73) Patentinhaber : **Semperit Reifen Aktiengesellschaft Wienersdorferstrasse 20-24 A-2514 Traiskirchen (AT)**

(72) Erfinder : **Hochrainer, Rupert, Dr. Anton Kriegergasse 78 A-1238 Wien (AT)**

(74) Vertreter : **Vinazzer, Edith Semperit Reifen Aktiengesellschaft Patentabteilung Wienersdorferstrasse 20-24 A-2514 Traiskirchen (AT)**

EP 0 397 639 B1

**Beschreibung**

Die Erfindung betrifft einen Radialreifen für Lastkraftwagen, insbesondere für die Antriebsachse, dessen Laufflächenprofil eine Block- oder eine kombinierte Band/Blockstruktur mit zwei Schulterblockreihen aufweist, wobei zwischen den Blöcken der Schulterblockreihen auf einem bezüglich der Profiloberfläche tieferliegenden Niveau Grundanhebungen vorgesehen sind.

Der Gestaltung des Laufflächenprofiles von Fahrzeugreifen kommt eine große Bedeutung zu, da viele Eigenschaften eines Reifens in einem hohen Maß von dieser Ausgestaltung abhängen. Dies trifft insbesondere auf LKW-Radialreifen zu, da hinsichtlich Fahreigenschaften und Wirtschaftlichkeit immer höhere Anforderungen gestellt werden. Gerade bei LKW-Antriebsachsreifen spielt eine möglichst optimale Übertragung von Antriebs- und Bremskräften sowie die Laufleistung, die mit einem möglichst gleichmäßigen Abrieb der gesamten Lauffläche im engen Zusammenhang steht, eine große Rolle. Von derartigen Reifen wird auch eine Verwendung im Ganzjahreseinsatz erwartet, der Reifen soll die genannten Eigenschaften auch auf nasser, matschiger und insbesonderer schneeiger Fahrbahn aufweisen. Herkömmliche Antriebsachsreifen weisen nun oft ein Laufflächenprofil auf, das eine Blockstruktur oder eine kombinierte Band/Blockstruktur hat. Hiebei werden schulterseitig Blockreihen vorgesehen, wobei insbesondere zwischen den benachbarten Blöcken dieser Schulterreihen auf einem bezüglich der Blockoberfläche tieferliegenden Niveau Grundanhebungen vorgesehen werden. Diese Grundanhebungen beschränken die Beweglichkeit der Schulterblöcke und wirken somit stabilisierend, was für einen gleichmäßigen Abrieb günstig ist. Ist die Lauffläche auf das Niveau der Grundanhebungen abgefahren, werden aus den Schulterblockreihen Schulterbänder. Im Schulterbereich sind daher nun keine Griffkanten mehr vorhanden, was insbesondere die Naßrutschfestigkeit und die Wintertauglichkeit erheblich beeinträchtigt, da die Traktion auf nasser bzw. schneeiger Fahrbahn merklich vermindert wird.

Die Erfindung hat sich nun die Aufgabe gestellt, einen insbesondere für LKW-Antriebsachsen geeigneten Reifen sozu gestalten, daß er als Ganzjahresreifen einsetzbar ist und somit eine sehr gute Wintertauglichkeit über seine gesamte Lebensdauer und gleichzeitig eine hohe Kilometerleistung (gleichmäßiger Abrieb) aufweist.

Gelöst wird die gestellte Aufgabe erfindungsgemäß dadurch, daß die Grundanhebungen durch in Verlängerung bzw. im wesentlichen in Verlängerung der Blockwände verlaufende Feineinschnitte von den Blöcken getrennt sind.

Ist ein gemäß der Erfindung gestaltetes Laufflächenprofil auf die Höhe der Grundanhebungen abgefahren, so tritt keine Verschlechterung des Traktionsverhaltens, was insbesondere auf nasser, matschiger oder schneeiger Fahrbahn wichtig ist, auf. Durch die Feineinschnitte sind nämlich nun sowohl bei den Grundanhebungen als auch an den Blöcken Griffkanten vorhanden, wobei die Grundanhebungen selbst, wie vorher, eine stabilisierende Wirkung auf die Blöcke ausüben. Die Anordnung der Feineinschnitte in Verlängerung bzw. im wesentlichen in Verlängerung der oberhalb der Grundanhebungen verlaufenden ------- Blockseitenwände wirkt sich zusätzlich sehr positiv auf die Erzielung eines gleichmäßigen Abriebsbildes aus.

Besonders vorteilhafte Ausgestaltungen bzw. Weiterentwicklungen der Erfindung sind in den Unteransprüchen enthalten.

So ist es insbesondere von Vorteil, wenn die Feineinschnitte auf eine Tiefe von mindesetens 70 % der generellen Dessintiefe, bevorzugt auf die Tiefe der generellen Dessintiefe reichen. Für eine optimale Wirkung der durch die Feineinschnitte entstehenden Griffkanten ist es günstig, wenn die Breite der Feineinschnitte mindestens 0,4 mm, bevorzugt ca. O,7 mm, beträgt. Die maximale Breite der Feineinschnitte sollte 1,5 mm nicht übersteigen, um den stabilisierenden Effekt der Grundanhebungen wirkungsvoll zu erhalten.

Bei einer bevorzugten Ausführungsform der Erfindung verlaufen die Feineinschnitte senkrecht zur Profiloberfläche. Es kann jedoch auch eine Variante gewählt werden, bei der die Feineinschnitte mit der Profiloberfläche einen spitzen Winkel von bis zu 30° einschließen.

Aus Stabilitätsgründen ist es weiters günstig, wenn die Grundanhebungen und somit die Feineinschnitte sich über eine Länge von mindestens 10 mm erstrecken.

Auf den Selbstreinigungseffekt des Laufflächenprofiles im Neuzustand bzw. wenig abgefahrenen Zustand wirkt es sich vorteilhaft aus, wenn die oberhalb der Grundanhebungen verlaufenden Blockwände zwischen benachbarten Blöcken derart abgeschrägt sind, daß sich jede Schulternut zur Profiloberfläche zu öffnet. Der zugehörige Neigungswinkel beträgt hiebei zwischen 2 und 10°.

Nach einer bevorzugten Ausführungsvariante sind die Feineinschnitte und die ihnen benachbarten bzw. zugehörigen Blockkanten geradlinig ausgebildet. Die durch die erfindungsgemäße Ausgestaltung erzielbaren Effekte treten jedoch auch bei Ausführungsvarianten auf, wo die Feineinschnitte und die zugehörigen Blockkanten, in Draufsicht betrachtet, Knickstellen aufweisen bzw. zickzackförmig verlaufen. Schließlich ist es weiters günstig, wenn sich das Niveau der Grundanhebungen auf mindestens 50 % der generellen Dessintiefe, bevorzugt auf bis zu zwei Drittel derselben, befindet.

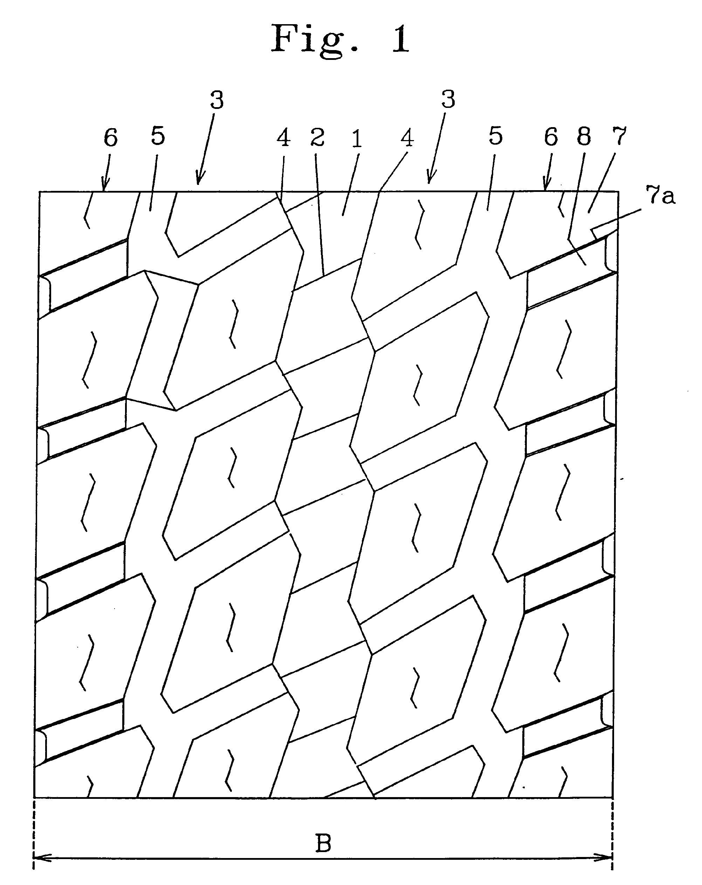

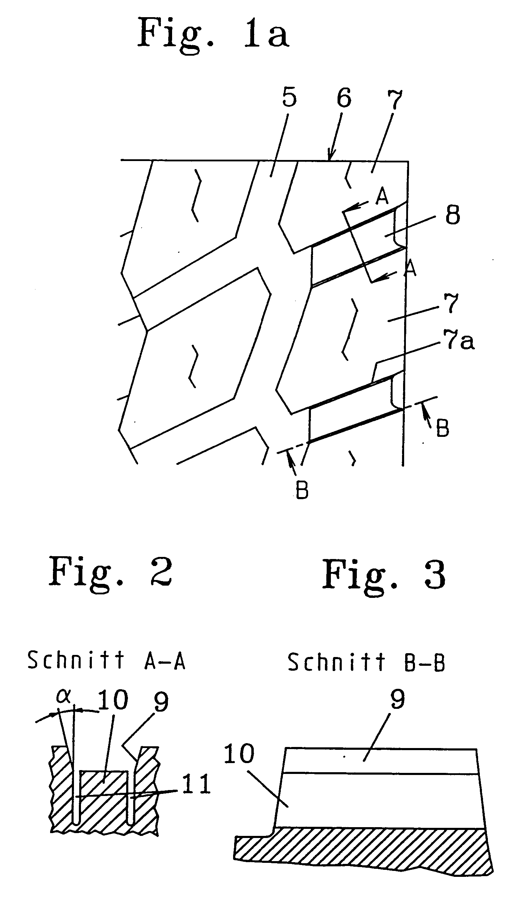

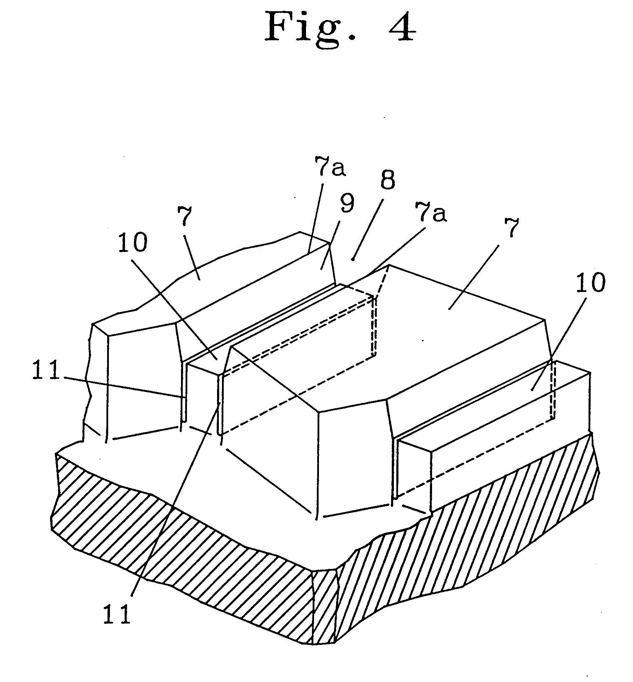

Weitere Merkmale, Vorteile und Einzelheiten der Erfindung werden nun anhand der Zeichnung, die ein Ausführungsbeispiel darstellt, näher beschrieben.Hiebei ist in Fig. 1 eine Draufsicht auf eine Teilabwicklung eines Laufflächenprofiles für einen LKW-Radialreifen dargestellt, Fig. 1a zeigt einen Ausschnitt aus dieser Teilabwicklung, Fig. 2 einen Schnitt entlang der Linie A-A der Fig. 1a, Fig. 3 einen Schnitt entlang der Linie B-B der Fig. 1a und Fig. 4 eine schematische Schrägansicht eines Bereiches der Fig. 1a.

Vorerst wird kurz auf Fig. 1, wo ein Laufflächenprofil für einen Radialreifen für Lastkraftwagen, und zwar für einen Antriebsachsreifen, beispielhaft dargestellt ist, Bezug genommen. Dieses Laufflächenprofil besitzt über seine Breite B, die der Breite des Reifens in der Bodenaufstandsfläche unter Nenndruck und Nennlast entspricht, eine Band/Blockstruktur mit einem durch Feineinschnitte 2 gegliederten Mittelband 1, an diese seitlich anschließend je eine Blockreihe 3, die durch je eine Umfangsnut 4, die im vorliegenden Ausführungsbeispiel sehr schmal ausgeführt ist, vom Mittelband 1 getrennt ist. Breite Umfangsnuten 5 mit einem etwa zickzackförmigen Verlauf trennen die Blockreihen 3 von Schulterblockreihen 6.

Jede Schulterblockreihe 6 setzt sich aus aneinander gereihten Blöcken 7 zusammen, die jeweils durch eine relativ breite Schulternut 8 voneinander getrennt sind. Die eigentliche Ausgestaltung der Blöcke 7 ist im Rahmen der vorliegenden Erfindung nicht sonderlich maßgeblich, doch werden die in Querrichtung des Profiles orientierten Blockkanten 7a bevorzugt geradlinig ausgebildet.

Im folgenden wird nun insbesondere auf die Figuren 2 bis 4 näher eingegangen, aus denen die erfindungsgemäße Ausgestaltung des Laufflächenprofiles besonders gut hervorgeht. Zwischen einander benachbarten Blöcken 7 sind sogenannte Grundanhebungen 10 vorgesehen, so daß die breiten Schulternuten 8 etwa bis zu einem Drittel der generellen Dessintiefe reichen. Bis zur Höhe der Grundanhebung 10 reichen nun Blockwandteile 9 aus benachbarten Blöcken 7, die derart abgeschrägt sind, daß sich jede Schulternut 8 zur Profiloberfläche zu leicht öffnet. Der zugehörige Neigungswinkel $\alpha$ wird in einem Bereich zwischen 2 und 10° gewählt. Erfindungsgemäß sind die Grundanhebungen 10 beidseitig durch Feineinschnitte 11 von den Blöcken 7 getrennt. Die Feineinschnitte 11 haben eine Breite von 0,4 bis 1,5 mm, insbesondere ca. 0,7 mm, sie verlaufen bevorzugt senkrecht zur Profiloberfläche, ihre Tiefe beträgt mindestens 70 % der generellen Dessintiefe des Profiles, bevorzugt stimmt ihre Tiefe mit der generellen Dessintiefe überein.

Solange die Lauffläche nicht bzw. wenig abgefahren ist, ist eine sehr gute Traktion, insbesondere auch auf nasser oder schneeiger Fahrbahn, durch die mit dem Untergrund zusammenwirkenden Blockkanten 7a gewährleistet. Die Grundanhebungen 10 bewirken gleichzeitig eine geringe Blockbeweglichkeit, was einen sehr gleichmäßigen Abrieb der Lauffläche zur Folge hat. Ist nun das Laufflächenprofil auf die Höhe der Grundanhebungen 10 abgefahren, sind die genannten positiven Effekte weiterhin vorhanden, da nun durch die Feineinschnitte 11 sowohl bei den Grundanhebungen 10 als auch an den Blöcken 7 Griffkanten vorhanden sind und die Grundanhebungen 10 selbst, wie vorher, die Beweglichkeit der Blöcke 7 beschränken.

Erwähnt sei weiters, daß es, wie dargestellt, günstig ist, die laufflächeninnenseitigen Begrenzungswände der Grundanhebungen 10 parallel zur Umfangsrichtung (siehe Äquatorlinie M-M in Fig. 1) auszurichten. Diese Maßnahme wirkt sich auf die Längsführung des Reifens, was insbesondere bei einem Triebachsreifen wichtig ist, positiv aus. Für einen gleichmäßigen Abrieb der Lauffläche in den Schulterbereichen ist es auch günstig, wenn die Blockkanten 7a sowie die Feineinschnitte 11 relativ zur Umfangsrichtung unter einem Winkel, der bevorzugt bis zu 40°von der Querrichtung abweicht, verlaufen. Die Grundanhebungen 10 selbst sollten sich über eine Länge von mindestens 10 mm erstrecken . Die ------ ------- Tiefe der Schulternuten 8 sollte maximal die Hälfte der generellen Dessintiefe betragen. Von der dargestellten Ausführungsform abweichend ist es selbstverständlich möglich, die an die Blockkanten 7a anschließenden Blockwände 9 über ihre gesamte Länge senkrecht zur Profiloberfläche auszugestalten. Es istauch ohne weiteres eine Variante möglich, bei der die Feineinschnitte 11 nicht senkrecht zur Profiloberfläche verlaufen, sondern unter spitzen Winkeln bis zu ca. 30°.

Bei einer weiteren, nicht dargestellten Ausführungsform können die Schulternuten,in Draufsicht betrachtet, geknickt bzw. sogar zickzackförmig gestaltet werden, wobei dann die Feineinschnitte 11 den Verlauf der Schulternuten folgend ausgebildet sind.

Zur Erzielung einer guten Wintertauglichkeit, insbesondere einer sehr guten Traktion auf nasser und schneeiger Fahrbahn, ist es insbesondere wichtig, die erfindungsgemäße Ausgestaltung in den Schulterblockreihen vorzusehen. Es ist jedoch selbstverständlich auch möglich, bei weiteren Blockreihen eine Ausgestaltung gemäß der Erfindung vorzunehmen.

**Patentansprüche**

1. Radialreifen für Lastkraftwagen, insbesondere für die Antriebsachse, dessen Laufflächenprofil eine Block- oder eine kombinierte Band/Blockstruktur mit zwei Schulterblockreihen (6) aufweist, wobei zwischen den Blöcken (7) der Schulterblockreihen auf einem bezüglich der Profiloberfläche tieferliegenden Niveau Grundanhebungen (10) vorgesehen sind, dadurch gekennzeichnet, daß die Grundanhebungen (10) durch in Verlängerung bzw. im wesentlichen in Verlängerung der Blockwände (9) verlaufende Feineinschnitte (11) von den Blöcken (7) getrennt sind.

2. Radialreifen nach Anspruch 1, dadurch gekennzeichnet, daß die Feineinschnitte (11) auf eine Tiefe von mindestens 70 % der generellen Dessintiefe reichen.

3. Radialreifen nach Anspruch 1 oder 2, dadurch gekennzeichnet, daß die Breite der Feineinschnitte (11) mindestens 0,4 mm, bevorzugt ca. 0,7 mm, beträgt.

4. Radialreifen nach Anspruch 1 oder 2, dadurch gekennzeichnet, daß die Breite der Feineinschnitte (11) maximal 1,5 mm beträgt.

5. Radialreifen nach einem der Ansprüche 1 bis 4, dadurch gekennzeichnet, daß die Feineinschnitte (11) senkrecht zur Profiloberfläche verlaufen.

6. Radialreifen nach einem der Ansprüche 1 bis 4, dadurch gekennzeichnet, daß die Feineinschnitte (11) mit der Profiloberfläche einen spitzen Winkel von bis zu 30° einschließen.

7. Radialreifen nach einem der Ansprüche 1 bis 6, dadurch gekennzeichnet, daß sich die Grundanhebungen (10) und somit die Feineinschnitte (11) über eine Länge von mindestens 10 mm erstrecken.

8. Radialreifen nach einem der Ansprüche 1 bis 7, dadurch gekennzeichnet, daß die oberhalb der Grundanhebungen (10) verlaufenden Blockwände (9) zwischen benachbarten Blöcken (7) derart abgeschrägt sind, daß sich jede Schulternut (8) zur Profiloberfläche zu öffnet.

9. Radialreifen nach Anspruch 8, dadurch gekennzeichnet, daß der Neigungswinkel ($\alpha$) der Blockwände (9) relativ zu einer Senkrechten auf die Profiloberfläche zwischen 2 und 10° beträgt.

10. Radialreifen nach einem der Ansprüche 1 bis 9, dadurch gekennzeichnet, daß die Feineinschnitte (11) und die ihnen benachbarten bzw. zugehörigen Blockkanten (7a) geradlinig ausgebildet sind.

11. Radialreifen nach einem der Ansprüche 1 bis 9, dadurch gekennzeichnet, daß die Feineinschnitte (11) und die zugehörigen Blockkanten (7a), in Draufsicht betrachtet, Knickstellen aufweisen bzw. zickzackförmig verlaufen.

12. Radialreifen nach einem der Ansprüche 1 bis 11, dadurch gekennzeichnet, daß sich das Niveau der Grundanhebungen (10) auf mindestens 50 % der generellen Dessintiefe, bevorzugt auf bis zu zwei Drittel derselben, befindet.

**Claims**

1. Radial tyre for lorries, more especially for the drive shaft, the tread surface profile of such tyre having a block structure or a combined strip-and-block structure with two rows (6) of shoulder blocks, basic raised portions (10) being provided between the blocks (7) of the rows of shoulder blocks at a lower level than the profile surface, characterised in that the basic raised portions (10) are separated from the blocks (7) by means of fine incisions (11), which extend as an extension of, or substantially as an extension of, the block walls (9).

2. Radial tyre according to claim 1, characterised in that the fine incisions (11) extend to a depth of at least 70 % of the general depth of the pattern.

3. Radial tyre according to claim 1 or 2, characterised in that the width of the fine incisions (11) is at least 0.4 mm, preferably approx. 0.7 mm.

4. Radial tyre according to claim 1 or 2, characterised in that the maximum width of the fine incisions (11) is 1.5 mm.

5. Radial tyre according to one of claims 1 to 4, characterised in that the fine incisions (11) extend vertically relative to the profile surface.

6. Radial tyre according to one of claims 1 to 4, characterised in that the fine incisions (11) form, with the profile surface, an acute angle of up to 30°.

7. Radial tyre according to one of claims 1 to 6, characterised in that the basic raised portions (10), and hence the fine incisions (11), extend over a length of at least 10 mm.

8. Radial tyre according to one of claims 1 to 7, characterised in that the block walls (9), which extend above the basic raised portions (10), are so inclined between adjacent blocks (7) that each shoulder groove (8) opens towards the profile surface.

9. Radial tyre according to claim 8, characterised in that the angle of inclination ($\alpha$) of the block walls (9) relative to a vertical line extending to the profile surface is between 2 and 10°.

10. Radial tyre according to one of claims 1 to 9, characterised in that the fine incisions (11) and the block edges (7a), which lie adjacent thereto or are associated therewith, extend in a rectilinear manner.

11. Radial tyre according to one of claims 1 to 9, characterised in that the fine incisions (11) and the associated block edges (7a) have angular portions or extend in a zigzag manner, when viewed from above.

12. Radial tyre according to one of claims 1 to 11, characterised in that the level of the basic raised portions (10) is situated at at least 50 % of the general depth of the pattern, preferably up to two-thirds thereof.

**Revendications**

1. Pneumatique à carcasse radiale pour camions, notamment pour l'essieu moteur, dont le profil de la surface de roulement comprend une structure à blocs ou à bandes/blocs combinés avec deux rangées de blocs d'épaulement (6), des saillies de fond (10) étant prévues entre les blocs (7) des rangées de blocs d'épaulement à un niveau situé plus profondément que celui de la surface supérieure du profil, caractérisé en ce que les saillies de fond (10) sont séparées des blocs (7) par de fines entailles (11) orientées dans le prolongement ou sensiblement dans le prolongement des parois (9) des blocs.

2. Pneumatique à carcasse radiale selon la revendication 1, caractérisé en ce que les fines entailles (11) atteignent une profondeur d'au moins 70% de la profondeur générale des sculptures.

3. Pneumatique à carcasse radiale selon la revendication 1 ou 2, caractérisé en ce que la largeur des fines entailles (11) est d'au moins 0,4 mm et de préférence d'environ 0,7 mm.

4. Pneumatique à carcasse radiale selon la revendication 1 ou 2, caractérisé en ce que la largeur des fines entailles (11) est au maximum de 1,5 mm.

5. Pneumatique à carcasse radiale selon l'une quelconque des revendications 1 à 4, caractérisé en ce que les fines entailles (11) sont perpendiculaires à la surface supérieure du profil.

6. Pneumatique à carcasse radiale selon l'une quelconque des revendications 1 à 4, caractérisé en ce que les fines entailles (11) forment avec la surface supérieure du profil un angle aigu pouvant atteindre 30°.

7. Pneumatique à carcasse radiale selon l'une quelconque des revendications 1 à 6, caractérisé en ce que les saillies de fond (10) et de ce fait les fines entailles (11) s'étendent sur une longueur d'au moins 10 mm.

8. Pneumatique à carcasse radiale selon l'une quelconque des revendications 1 à 7, caractérisé en ce que les parois (9) de blocs qui sont situées au-dessus des saillies de fond (10) sont biseautées entre blocs voisins (7) de manière que chaque rainure d'épaulement (8) s'ouvre en direction de la surface supérieure du profil.

9. Pneumatique à carcasse radiale selon la revendication 8, caractérisé en ce que l'angle d'inclinaison (a) des parois (9) des blocs par rapport à une perpendiculaire à la surface supérieure du profil est compris entre 2 et 10°.

10. Pneumatique à carcasse radiale selon l'une quelconque des revendications 1 à 9, caractérisé en ce que les fines entailles (11) et les bords (7a) des blocs qui en sont voisins ou qui leur sont associés sont constitués en ligne droite.

11. Pneumatique à carcasse radiale selon l'une quelconque des revendications 1 à 9, caractérisé en ce que les fines entailles (11) et les bords (7a) des blocs associés, vus en plan, comportent des coudes ou sont disposés en zigzag.

12. Pneumatique à carcasse radiale selon l'une quelconque des revendications 1 à 11, caractérisé en ce que le niveau des saillies de fond (10) se trouve à au moins 50% de la profondeur générale des sculptures et parvient de préférence jusqu'au deux tiers de celle-ci.

# Fig. 1

# Fig. 1a

# Fig. 2

# Fig. 3

Schnitt A–A

Schnitt B–B

# Fig. 4